# EUROPEAN PATENT APPLICATION

(11) **EP 0 858 119 A2**
(43) Date of publication of application: **12.08.1998**
(21) Application number: 98100856.8
(22) Date of filing: 19.01.1998
(51) Int. Cl.: H01M 10/40

(54) **Polymer electrolyte and lithium-polymer battery using the same**

(30) Priority: 20.01.1997 JP 7285/97
(71) Applicant: MATSUSHITA ELECTRIC INDUSTRIAL CO., LTD., Kadoma-shi, Osaka 571 (JP)
(72) Inventor: Nishimura, Ken, Moriguchi-shi (JP); Ogawa, Masahiko, Takarazuka-shi (JP); Sakai, Tetsuhisa, Moriguchi-shi (JP); Ishida, Akiko, Moriguchi-shi (JP); Eda, Nobuo, Hirakata-shi (JP)
(74) Representative: Patentanwälte Leinweber & Zimmermann

(57) **Abstract**

In a gel polymer electrolyte comprising an organic electrolytic solution and a polymer alloy film made of at least one polymer slightly swelling in the organic electrolytic solution and a polymer soluble therein, wherein the sizes of the phase separation of the soluble polymer is controlled to be less than 100 nm. The production of lithium dendrite is inhibited by the use of the gel polymer electrolyte. By virtue of the inhibition, a battery having high safety and reliability is provided.

## Description

### BACKGROUND OF THE INVENTION

The present invention relates to a polymer electrolyte and a lithium-polymer battery using the same.

Lithium ion secondary batteries are composed of, for example, LiCoO₂ as a positive electrode, natural graphite as a negative electrode, and an organic solution comprising ethylene carbonate as an electrolyte, and are characterized by having a high energy density. By taking advantage of this characteristic, the lithium ion secondary batteries are widely utilized, for example, as an electric source for a portable personal computer or a portable telephone. In further increasing the electric density of the battery, the use of a metallic-lithium negative electrode is effective.

The metallic-lithium negative electrode has a large discharge capacity which is theoretically about 10 times per unit weight and about 2.5 times per unit volume as large as those of a natural-graphite negative electrode. Although the metallic-lithium negative electrode has such a superior capacity, it involves serious problems such as the deformation and the production of dendritic lithium (hereinafter abbreviated as dendrite), which are caused by charge-discharge cycles.

The dendrite is easily released from a plate. The released dendrite is not utilizable for charge and discharge reactions because its electric contact with the plate is broken off. In addition, lithium is a potent reducing agent and hence reacts with an electrolytic solution and forms a film. Therefore, when surface area is increased by the dendrite, the volume of the film is increased, resulting in a decreased amount of lithium usable for charge and discharge. For these reasons, the production of the dendrite remarkably decreases the cycle efficiency of the negative electrode. For maintaining a large number of cycles, lithium should be packed in a large excess relative to the capacity of the positive electrode, so that the energy density of the battery is decreased.

Further, when the lithium surface area is greatly increased, use or storage of such battery at a high temperature is likely to cause heat generation in some cases. According to the report printed in Proceedings of Seventh International Meeting on Lithium Batteries, p. 12 (1994), when the lithium surface area of the negative electrode is greatly increased by the formation of the dendrite by charge and discharge, the self-heat-generation rate is rapidly increased, so that in an extreme case, thermal runaway is caused by the reaction of the negative electrode with the electrolytic solution.

Moreover, the dendrite penetrates through a porous separator made of polypropylene or polyethylene, and causes internal short-circuit of the battery or decrease the cycle efficiency and the safety.

For preventing the production of the dendrite, the study and development of solid electrolytes as a substitute for conventional organic electrolytic solutions are being promoted. Of the solid electrolytes, polymer electrolytes are particularly noted because they are flexible and can easily be formed into a thin film. The polymer electrolytes contain a solid solution of a lithium salt. Their inhibitory effect on the production of the dendrite has been confirmed as described in "Collection of the summaries of lectures to the 32th forum on batteries", p. 255 (1991). However, as to the ionic conductivity of the polymer electrolytes, for example, the ionic conductivity of a poly(ethylene oxide) (hereinafter referred to as PEO)-LiClO₄ complex is about 10⁻⁷ S/cm. This value is extremely lower than 10⁻³ - 10⁻² S/cm, the ionic conductivity of the organic electrolytic solution. Therefore, when such a polymer electrolyte is used in a battery, the internal resistance is increased, so that the discharge capacity of the battery is remarkably decreased.

Accordingly, for assuring substantially the same ionic conductivity as that of the electrolytic solution, a gel electrolyte obtained by impregnating a polymer matrix with the electrolytic solution is being developed. The polymer used in the gel is mainly a polymer soluble in the electrolytic solution, such as PEO. Since the ionic conduction is carried out through a liquid phase of the gel, there can be attained a high ionic conductivity which is substantially the same as that of the electrolytic solution. The polymer, however, is dissolved in the electrolytic solution to be decreased in mechanical strength, i.e. it loses its function as a solid. Therefore, when the gel electrolyte is used in a battery, the dendrite growth cannot be completely inhibited, resulting in causing internal short-circuit. Accordingly, a problem to be solved is the improvement of mechanical strength of the gel electrolyte.

As a means for improving the mechanical strength of the gel electrolyte, there is, for example, a method of making a crosslinked gel electrolyte is disclosed in JPA 5-109310, in which a mixture of a photo-crosslinkable monomer and an electrolytic solution is irradiated with electron beams or ultraviolet rays. This method, however, brings about no marked improvement in the mechanical strength. Furthermore, the crosslinked gel electrolyte is not stable to active materials of a positive electrode for 4-V battery, such as LiCoO₂ and is decomposed or converted in a short period.

Accordingly, there has been developed, for example, a method comprising allowing a gel electrolyte and a polypropylene porous film to coexist as disclosed in JPA 61-183253. The employment of the polypropylene porous film, however, is not an ultimate solution and causes internal short-circuit due to lithium dendrite as in the case of using a porous separator alone as described above.

As described above, a gel electrolyte is required to have practically sufficient ionic conductivity, mechanical strength for preventing internal short-circuit due to lithium dendrite, and stability to active materials for a 4-V battery.

The present invention is intended to provide a novel gel electrolyte having the above necessary characteristics and a battery using the same.

### SUMMARY OF THE INVENTION

For solving the above problem, the gel polymer alloy electrolyte of the present invention comprises an organic electrolytic solution and a polymer alloy film comprising a phase separation, the film being made of at least one polymer slightly swelling in the organic electrolytic solution and a polymer soluble therein, and the size of a separated micro-phase of the soluble polymer in the polymer alloy film is adjusted to less than 100 nm. Since this value is smaller than the diameter of dendrite, dendrite cannot penetrate through the polymer alloy film.

In a preferred embodiment, poly(vinylidene fluoride)s (hereinafter referred to as PVDF) or copolymers of vinylidene fluoride are used as the polymer slightly swelling in the electrolytic solution, and a poly(methyl methacrylate) (hereinafter referred to as PMMA), poly(methyl acrylate) or poly(ethyl methacrylate), preferably PMMA is used as the soluble polymer.

The lithium-polymer battery of the present invention comprises a negative electrode, a positive electrode and the above-mentioned gel polymer alloy electrolyte provided between them. The employment of the electrolyte of the present invention prevents dendrite production and hence provides a battery which is free from internal short-circuit and has high cycle efficiency and safety.

In a preferred embodiment, the negative electrode prepared from at least one member selected from the group consisting of metallic lithium, lithium alloys, inorganic compounds capable of absorbing and releasing lithium, and carbon materials capable of absorbing and releasing lithium is used, and a lithium-containing transition metal oxide is used as the active material of the positive electrode.

### BRIEF DESCRIPTION OF THE DRAWINGS

Fig. 1 is a vertical cross-sectional view of a coin-shaped lithium battery using a gel electrolyte of the present invention.

Fig. 2 shows Charge-discharge curves of a lithium battery using a gel electrolyte of the present invention and lithium batteries using reference gel electrolytes, respectively.

Fig. 3 is a graph showing the discharge characteristics of lithium batteries using gel electrolytes of the present invention, respectively, and the lithium battery using the reference gel electrolyte.

Fig. 4 is a graph showing the cycle characteristics of the lithium battery using the gel electrolyte of the present invention and the lithium battery using the reference gel electrolyte.

### DETAILED DESCRIPTION OF THE INVENTION

The gel polymer alloy electrolyte of the present invention is a polymer electrolyte comprising an organic electrolytic solution and a polymer alloy film comprising a phase separation wherein the polymer alloy film is made of at least one polymer slightly swelling in the organic electrolytic solution and a polymer soluble therein, wherein the size of the phase separation of the soluble polymer is less than 100 nm. The phase separation of the polymer which is slightly swelling in the organic electrolytic solution is not limited, however preferably the size is less than 100 nm.

In the present specification, *"*slightly swelling*"* means that the polymer is insoluble in an organic electrolyte at a room temperature to the extent that the solubility can not be measured by use of the ordinary methods, however the polymer may slightly swell, *"*the size of the phase separation*"* means the mean diameter of the domain of the polymers consisting mainly of the slightly swelling polymer or the mean diameter of the domain of the polymers consisting mainly of the soluble polymer. The mean diameter of the domain of the polymers consisting mainly of the soluble polymer is preferably measured at the plane at which the soluble polymer contacts with or will contact with the negative electrode.

In this electrolyte, the production of lithium dendrite is inhibited by controlling the sizes of phases formed by the phase separation of the polymer alloy film.

The lithium-polymer battery of the present invention comprises a negative electrode, a positive electrode and the gel polymer alloy electrolyte of the present invention provided between them. The employment of the electrolyte of the present invention makes it possible to realize a battery which is free from internal short-circuit and has high cycle efficiency and safety.

Furthermore, in the lithium-polymer battery, the gel polymer alloy electrolyte of the present invention may be contained in at least one of the positive electrode and the negative electrode. The incorporation of the polymer electrolyte of the present invention into the electrode(s) permits smooth supply of lithium ions or the electrolytic solution to the active material.

As the polymer slightly swelling in the organic electrolytic solution, there is preferably used at least one member selected from the group consisting of PVDF and copolymers of vinylidene fluoride. The other monomer of the copolymers is not limited however olefins such as ethylene, propylene and butene are preferable.

As the polymer soluble in the organic electrolytic solution, PMMA are preferable for adjusting the size of the phase separation of the soluble polmer to less than 100 nm.

That is, the gel polymer electrolyte of the present invention preferably comprises an organic electrolytic solution and a polymer alloy film formed by mixing or mutual dissolution of a PMMA and at least one polymer selected from the group consisting of PVDF and copolymers of vinylidene fluoride.

As the negative electrode, preferably there is used at least one member selected from the group consisting of metallic lithium, lithium alloys, inorganic compounds capable of absorbing and releasing lithium, and carbon materials capable of absorbing and releasing lithium.

As the positive-electrode active material, preferably a lithium-containing transition metal oxide is used.

In the gel polymer alloy electrolyte of the present invention, the production of lithium dendrite is inhibited by controlling the sizes of the phase separation.

Although depending on the combination of the polymers, the structure of the polymer alloy is, for example, an archipelagic structure in which a sea of a polymer A is studded with islands of a polymer B, or a modulation structure in which polymers A and B are continuously interwound with each other. In either case, the polymer alloy has a structure formed by micro-phase separation into a (polymer A)-rich phase and a (polymer B)-rich phase, the sizes of which can be designed both several microns or less.

The above-mentioned phase separation structure is a main factor for both the maintenance of mechanical strength of the polymer alloy gel and the attainment of a high ionic conductivity. When the polymer alloy film is immersed in the electrolytic solution, the electrolytic solution permeates into the polymer soluble in the electrolytic solution, so that the polymer alloy film is gelatinized. The soluble polymer, however, maintains a fixed state without flowing because the slightly swelling polymer is microscopically interwound and holds the soluble polymer. Therefore, the polymer alloy film functions as a gel having high mechanical strength and ionic conductivity.

Lithium dendrite has a diameter of 100 nm or more. This size is a basis on which the polymer alloy of the present invention is designed. Since the ionic conduction through the electrolyte is carried out through a phase of the polymer soluble in the organic electrolytic solution, lithium deposition takes place in the boundary surface between this polymer phase and the lithium negative electrode.

In this case, if the size of the phase separation of the soluble polymer is 100 nm or more, dendrite grows through this polymer phase. However, when the size is smaller than the diameter of dendrite, lithium cannot be deposited as dendrite and grows flatly.

Thus, the employment of the electrolyte of the present invention permits realization of a battery which is free from internal short-circuit and has high cycle efficiency and safety.

For adjusting the size of the phase separation to less than 100 nm, the polymer slightly swelling in the organic electrolytic solution is preferably at least one member selected from the group consisting of PVDF and copolymers of vinylidene fluoride, and the soluble polymer is preferably a PMMA.

Since both PVDF and PMMA are stable to positive-electrode active materials for a 4-V battery, such as LiCoO₂, the electrolyte of the present invention can be used in a lithium secondary battery of 4 volts which has been difficult to realize by the use of the above-mentioned crosslinked gel electrolyte of the prior arts.

Particularly when metallic lithium easily depositable as dendrite is used as the negative electrode, a marked effect can be obtained. However, also when there is used, for example, a lithium alloy, an inorganic compound capable of absorbing and releasing lithium, or carbon, which form and grow dendrite in a reduced amount as compared with metallic lithium, the employment of the electrolyte of the present invention permits improvement of the safety and various characteristics.

### EXAMPLES

Examples of the present invention are explained below with reference to the drawings.

### Example 1

In this example, there was produced a gel electrolyte of a polymer alloy film obtained by mutual dissolution of PVDF, a polymer slightly swelling in an organic solvent and PMMA, a polymer soluble in the organic solvent.

A process for producing the polymer alloy film is described below.

First, a polymer solution prepared by dissolving PVDF in N-methyl-2-pyrrolidinone (hereinafter referred to as NMP) to a concentration of 1 to 10% by weight and a polymer solution prepared by dissolving PMMA in NMP to a concentration of 1 to 10% by weight were mixed in a weight ratio of 50 : 50. The resulting solution was applied on a smooth metal or glass plate and the solvent was removed by evaporation in a dryer at 80°C to obtain a thin polymer alloy film. The volume of the solution applied was adjusted so that the film thickness might be 20 µm. The obtained film was dried in vacuo at 80°C to remove the remaining solvent and water sufficiently.

When the obtained polymer alloy film was observed by a transmission electron microscope, no clear phase separation structure was found. Since the presence of a phase separation structure of 100 nm or more can be confirmed by the transmission electron microscope, it is concluded that the polymer alloy film according to the present invention has a phase separation structure of less than 100 nm.

A gel electrolyte was obtained by immersing the above-mentioned polymer alloy film in a bath of an organic electrolytic solution. As the organic electrolytic solution, there was used a solution prepared by dissolving LiPF₆ as a solute in a mixed solvent of ethylene carbonate and ethylmethyl carbonate (25 : 75 by volume) to a concentration of 1.5 mols/liter.

A disc with a diameter of 17 mm was punched out of the above-mentioned gel electrolyte, held between two metallic lithium foil discs with a diameter of 15 mm, and set in a coin-shaped battery case. The case was sealed to prepare a cell for measuring ionic conductivity. The ionic conductivity σ was measured by countercurrent impedance method and found to be 1.2 × 10⁻³ S·cm⁻¹.

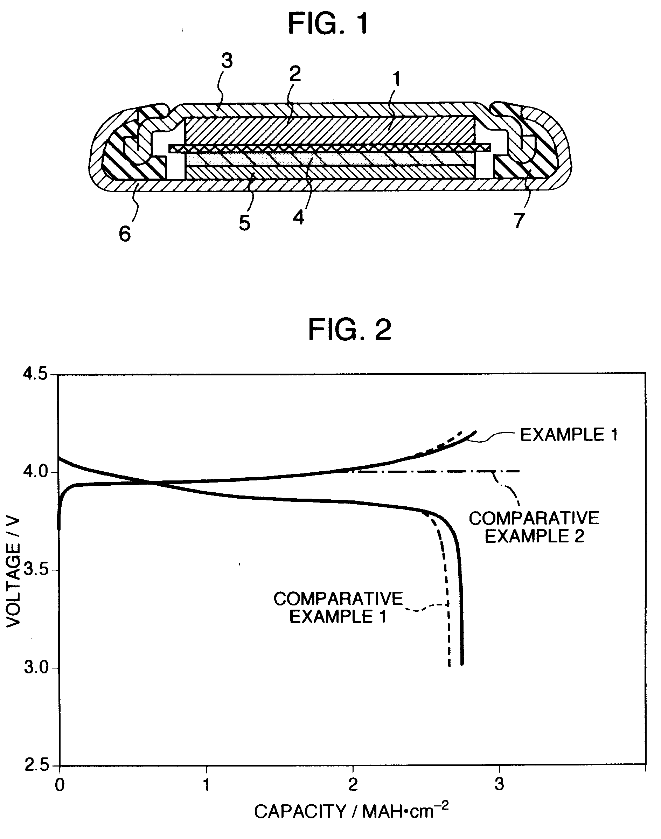

The coin-shaped battery shown in Fig. 1 was produced using a disc with a diameter of 15 mm punched out of the above-mentioned gel electrolyte. A positive electrode layer 4 was produced by coating a positive electrode current collector 5 made of aluminum foil, with a mixture of LiCoO₂ as an active material, carbon black as a conductive material, and an aqueous dispersion of a poly(ethylene tetrafluoride) as a binder (100 : 3 : 10 by weight), drying and then rolling the current collector 5, and punching a disc with a diameter of 12.5 mm out of the thus treated current collector 5. A negative electrode layer 2 was produced by pressure-bonding a metallic lithium disc with a diameter of 14 mm directly to the lid 3 of a coin-shaped battery case. The above-mentioned positive electrode, disc of the polymer alloy gel electrolyte 1, and negative electrode were laminated and then set in the coin-shaped battery case 6, which was sealed with a gasket 7 to produce the battery of Example 1.

### Comparative Example 1

Using a gel electrolyte obtained by inserting a PVDF gelatinized with an electrolytic solution into the pores of a polypropylene porous film, there were produced a cell for ionic conductivity measurement and a coin-shaped battery, each of which had the same structure as in Example 1.

The cell for ionic conductivity measurement was produced as follows. 1.5 Grams of PVDF powder was sufficiently dispersed in 8.5 g of an electrolytic solution prepared by dissolving LiPF₆ as a solute in a mixed solvent of ethylene carbonate and ethylmethyl carbonate (25 : 75 by volume) to a concentration of 1.5 mols/liter. A polypropylene porous film separator (porosity: 38%) with a diameter of 17 mm was coated with the above-mentioned PVDF dispersion, held between two metallic lithium foil discs with a diameter of 15 mm, and then set in a coin-shaped battery case. The case was sealed to produce the cell for ionic conductivity measurement. The produced coin-shaped cell was heated at 90°C for 5 minutes to gelatinize the PVDF dispersion, whereby the desired polymer gel electrolyte was produced. After completion of the heating, the coin-shaped cell was cooled to room temperature and the ionic conductivity σ of the gel electrolyte was measured by countercurrent impedance method. As a result, σ was found to be 8.1 × 10⁻⁴ S·cm⁻¹.

The coin-shaped battery having the same structure as in Example 1 was produced in the same manner as for the cell for ionic conductivity measurement. This battery is referred to as the battery of Comparative Example 1.

### Comparative Example 2

A coin-shaped battery having the same structure as in Example 1 was produced using a crosslinked gel electrolyte.

The coin-shaped battery was produced as follows. A polyethylene glycol diacrylate as a photocrosslinkable polymer, benzyl dimethyl ketal as a photopolymerization initiator, and an electrolytic solution obtained by dissolving LiPF₆ to a concentration of 1 mol/liter in a mixture of equal volumes of propylene carbonate and ethylene carbonate were mixed in a weight ratio of 20 : 0.1 : 80 to prepare a solution. This solution was applied on a negative electrode metallic lithium to a thickness of 50 µm and irradiated with ultraviolet rays having a maximum output wavelength of 365 nm for 3 minutes. By the irradiation, the above-mentioned polymer was crosslinked and cured, so that a gel electrolyte containing the nonaqueous electrolyte was formed on the negative electrode metallic lithium. The same positive electrode as in Example 1 was laminated on the gel electrolyte, and the resulting laminate was set in a battery case to obtain a battery of Comparative Example 2.

Fig. 2 shows charge-discharge curves in the first cycle of the batteries of Example 1 and Comparative Examples 1 and 2. The batteries were tested on a constant-current system of 0.56 mA/cm² and measurement was carried out in a voltage range of 4.2 V to 3.0 V at room temperature.

From Fig. 2, it can be seen that the lithium-polymer batteries of Example 1 and Comparative Example 1 have a discharge capacity of 2.0 mA/cm² or more and hence have sufficient performance characteristics as a battery which works at ordinary temperature. On the other hand, the battery of Comparative Example 2 cannot be charged to 4.2 V. The battery voltage during charge became constant near 4.1 V. The reason can be guessed as follows: the crosslinked gel electrolyte is decomposed by LiPF₆ having a powerful oxidative effect.

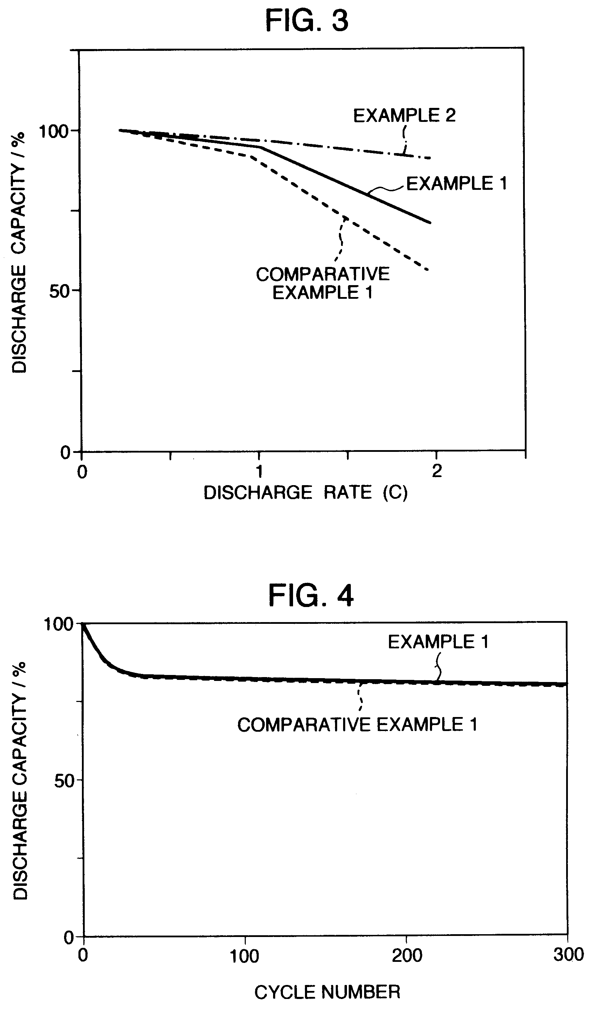

Next, the batteries of Example 1 and Comparative Example 1 were tested at a charge current of 0.2 C (0.56 mA/cm²) and a discharge current of each of 0.2 C (0.56 mA/cm²), 0.5 C (1.4 mA/cm²), 1.0 C (2.8 mA/cm²) and 2.0 C (5.6 mA/cm²), and their discharge capacity was measured. Fig. 3 shows the results obtained.

From Fig. 3, it can be seen that the battery of Example 1 is superior to the battery of Comparative Example 1 in discharge characteristics at all the discharge current values. The reason is as follows. The gel electrolyte of the battery of Example 1 is a substantially homogeneous polyelectrolyte because of the mutual dissolution of PVDF and PMMA, so that ionic migration is easily carried out in the whole separator. In the battery of Comparative Example 1, since the porosity of the polypropylene porous film is as low as 38% and moreover the battery has a structure formed by packing the gel electrolyte into the pores of the porous film, ionic migration is not easily carried out in the whole separator but partially carried out only in pore portions. As can be seen from Fig. 3, the above difference becomes remarkable with an increase of the discharge rate, i.e., an increase of the discharge current.

Fig. 4 shows the cycle characteristics of the batteries of Example 1 and Comparative Example 1. Both of the batteries of Example 1 and Comparative Example 1 were stably charged or discharged until the completion of the 300th cycle. When the battery of Example 1 was disassembled after the completion of the 300th cycle and observed, no penetration of dendrite was found, and only a small amount of dendrite had been accumulated on the boundary surface between the lithium negative electrode and the electrolyte. When the battery of the Comparative Example 1 was disassembled and then observed in the same manner as above, no penetration of dendrite was found but dendrite had been produced in the gel electrolyte in the pores of the polypropylene porous film. These facts reveal that the battery of Example 1 inhibits the growth of dendrite and provides a lithium secondary battery having high safety and reliability.

### Example 2

A polymer secondary battery was produced by incorporating the polymer alloy gel electrolyte of the present invention into both a positive electrode and a negative electrode.

The positive electrode was produced by mixing 5 g of lithium cobalt oxide, 0.15 g of carbon black and 4 g of a mixed solution of a 12 wt% solution of a PVDF in N-methyl-pyrrolidinone (hereinafter referred to as NMP) and a 12 wt% solution of a PMMA in NMP, applying the resulting paste on an aluminum current collector, drying, rolling, and punching the collector with a diameter of 15 mm. Then, the obtained positive electrode was immersed in the same electrolytic solution as in Example 1, and incorporated therewith under a vacuum of -50 cmHg.

The negative electrode was produced by mixing 10 g of spheroidal graphite, 0.53 g of carbon fiber, 8.4 g of a mixed solution of a 12 wt% solution of a PVDF in NMP and a 12 wt% solution of a PMMA in NMP, 4.2 g of NMP and 4.2 g of acetonitrile, applying the resulting paste on a copper current collector, drying, rolling, and punching the collector with a diameter of 15 mm. Then, the obtained negative electrode was immersed in the same electrolytic solution as in Example 1, and incorporated therewith under a vacuum of -50 cmHg.

The polymer alloy gel electrolyte was produced in the same manner as in Example 1 and a disc with a diameter of 16 mm was punched out of the electrolyte.

The above-mentioned positive electrode, disc of the gel electrolyte and negative electrode were laminated and then set in a coin-shaped battery case, and the case was sealed. The thus obtained battery was tested at a charge current of 0.2 C (0.56 mA/cm²) and a discharge current of each of 0.2 C (0.56 mA/cm²), 0.5 C (1.4 mA/cm²), 1.0 C (2.8 mA/cm²) and 2.0 C (5.6 mA/cm²), and its discharge capacity was measured. Fig. 3 shows the results obtained.

As is clear from Fig. 3, the battery obtained by incorporating the gel electrolyte of the present invention into the positive electrode and the negative electrode exhibits very good discharge characteristics even at a high discharge rate. For this fact, two causes are thought of. The first cause is that the carbon negative electrode has a much larger reaction area than does a lithium metal electrode. The second cause is that since the active material of the plate used in each of Example 1 and Comparative Example 1 is made dense by the rolling, the migration of lithium ions or the electrolytic solution during charge or discharge is inhibited to a certain extent. In each plate used in Example 2 which was produced by incorporating the gel electrolyte into the electrode, therefore, in this preferred embodiment the polymer alloy is present around the active material. Therefore, when even the rolled electrode is incorporated with the electrolytic solution, the polymer alloy absorbs the electolytic solution, so that lithium ions or the electrolytic solution can be smoothly supplied to the active material. It can be speculated that for the above reason, the battery of Example 2 can exhibit satisfactory characteristics even at a high discharge rate.

Although PVDF was used in Examples as a polymer slightly swelling in the electrolytic solution, a vinylidene fluoride copolymer or other polymers may be used in place of PVDF.

Although PMMA was used in Examples as a polymer soluble in the electrolytic solution, other polymers such as poly(methyl acrylate), poly(ethyl methacrylate), etc. may be used in place of PMMA.

Although the suitable blending proportions of PVDF used as a polymer difficultly soluble in the electrolytic solution and PMMA used as a polymer soluble in the electrolytic solution are described in Example 2, the blending proportions of materials for obtaining an electolyte having small sizes of separated phases, a high mechanical strength and a high ionic conductivity vary depending on the materials.

Although LiPF₆ was used in Examples as the solute of the organic electrolytic solution, other lithium salts such as LiCF₃SO₃, LiClO₄, LiN(CF₃SO₂)₂, LiAsF₆, LiBF₄, etc. may be used in place of LIPF₆.

Although the mixed solvent of ethylene carbonate and ethylmethyl carbonate (25 : 75 by volume) was used in Examples as the solvent of the organic electrolytic solution, other organic solvents or mixed solvents such as the mixed solvent of equal volumes of propylene carbonate and ethylene carbonate may be used in place of said mixed solvent.

Although metallic lithium and a carbon material capable of absorbing and releasing lithium were used in Examples as the negative electrode, the present invention is applicable also to lithium ion batteries, and a lithium alloy or an inorganic compound capable of absorbing and releasing lithium may be used.

Although LiCoO₂ was used in Examples as the positive-electrode active material, either other lithium transition metal oxides (e.g. LiNiO₂, LiMn₂O₄, LiMnO₂, etc.) or metal compounds containing no lithium (e.g. MnO₂, V₂O₅, etc.) may be used in place of LiCoO₂.

## Claims

1. A gel polymer electrolyte comprising an organic electrolytic solution and a polymer alloy film comprising a phase separation wherein the polymer alloy film is made of at least one polymer slightly swelling in the organic electrolytic solution and a polymer soluble therein, the size of the phase separation of the soluble polymer being less than 100 nm.

2. A polymer electrolyte according to claim 1, wherein the polymer slightly swelling in the organic electrolytic solution is selected from the group consisting of poly(vinylidene fluoride)s and copolymers of vinylidene fluoride.

3. A polymer electrolyte according to claim 1, wherein the polymer soluble in the organic electrolytic solution is a poly(methyl methacrylate).

4. A gel polymer electrolyte comprising an organic electrolytic solution and a polymer alloy film comprising a phase separation wherein the polymer alloy film is formed by mixing or mutual dissolution of a poly(methyl methacrylate) and at least one polymer selected from the group consisting of poly(vinylidene fluoride)s and copolymers of vinylidene fluoride, the size of the phase separation of the soluble polymer being less than 100 nm.

5. A lithium-polymer battery comprising a negative electrode, a positive electrode and a polymer electrolyte provided between them, wherein the polymer electrolyte is a gel polymer electrolyte comprising an organic electrolytic solution and a polymer alloy film comprising a phase separation, the polymer alloy film made of at least one polymer slightly swelling in the organic electrolytic solution and a polymer soluble therein, and the size of the phase separation of the soluble polymer is less than 100 nm.

6. A lithium-polymer battery according to claim 5, wherein said polymer electrolyte is contained in the negative electrode, the positive electrode or both of the electrodes.

7. A lithium-polymer battery according to claim 5 or 6, wherein the negative electrode is prepared from at least one member selected from the group consisting of metallic lithium, lithium alloys, inorganic compounds capable of absorbing and releasing lithium, and carbon materials capable of absorbing and releasing lithium.

8. A lithium-polymer battery according to claim 5 or 6, wherein the active material of the positive electrode is a lithium-containing transition metal oxide.

9. A lithium-polymer battery according to claim 5 or 6, wherein the polymer slightly swelling in the organic electrolytic solution is selected from the group consisting of poly(vinylidene fluoride)s and copolymers of vinylidene fluoride.

10. A lithium-polymer battery according to claim 5 or 6, wherein the polymer soluble in the organic electrolytic solution is a poly(methyl methacrylate).
